# EUROPEAN PATENT APPLICATION

(11) **EP 3 200 085 A1**
(43) Date of publication of application: **02.08.2017**
(21) Application number: 15844178.2
(22) Date of filing: 10.02.2015
(51) Int. Cl.: G06F 12/16

(54) **DATA SAVING METHOD AND DEVICE AND TERMINAL**

(30) Priority: 24.09.2014 CN 201410495841
(71) Applicant: ZTE Corporation, Shenzhen, Guangdong 518057 (CN)
(72) Inventor: ZHU, Shukui, Shenzhen Guangdong 518057 (CN); SHI, Xiaofei, Shenzhen Guangdong 518057 (CN); ZHANG, Qi, Shenzhen Guangdong 518057 (CN)
(74) Representative: Deambrogi, Edgardo
(86) International application number: PCT/CN2015/072700
(87) International publication number: WO 2016/045303

(57) **Abstract**

A data saving method and device and a terminal are provided. In the data saving method, power failure of a power supply is detected (S102); a protection mechanism program for power failure data protection is triggered (S104); and power failure data stored before occurrence of the power failure of the power supply is stored into a predetermined memory according to the protection mechanism program (S106). The problem of increased system cost due to the use of a backup power supply when the power failure data is saved in the related art is solved. By virtue of the technical scheme, the power failure data can be saved without using a backup power supply.

## Description

### Technical Field

The present disclosure relates to the field of communications, and more particularly, to a data saving method and device, and a terminal.

### Background

As a "black box" of fault monitoring, data saving in power failure scenarios has been a hot spot of technological innovation. Three characteristics, i.e., sudden occurrence of power failure events, short lasting duration of power failure events and a large amount of data that needs to be saved in the power failure, disable the power failure data to be saved in time. The existing patents can be roughly seen as a combination of three methods. The first method is a method of increasing backup power supply in the system. By virtue of this method, the backup power supply can replace the system power supply to supply power in the event of power failure to meet the data saving time requirements. The second method is the use of a non-volatile flash memory (NAND FLASH) in the pursuit of a faster write speed to shorten the time to save data in a disguised form. The third method is the adoption of data compression after power failure to reduce the size of the write data.

However, for products in the field of wireless communications, first, the addition of backup power supply means an increase in cost. Second, the data of the base station product has a high reliability requirement. A "bad block" would appear randomly in the using process of NAND FLASH, which makes it hard to guarantee the correctness of the write data during the power failure. Finally, if all the data that need to be saved during the power failure are stored in a compressed form, the time of compression will inevitably lead to a delay in writing to the non-volatile memory, further increasing the requirement for power supplying time of the backup power supply. The duration of the power failure of base station products is generally up to tens of milliseconds on the order of magnitude.

NAND FLASH and Non-volatile Flash (NOR FLASH) are the most common non-volatile memories. In the consumer electronics market, because of the price advantage and the write speed of NAND FLASH that cannot be mentioned in the same breath, it is just natural that NOR FLASH is replaced by NAND FLASH. However, compared with the NAND FLASH, data of NOR FLASH has a higher reliability. System firmware of for example automotive, industrial, medical, wireless communication products, or consumer electronics has a very high requirement for the read speed and reliability, but does not emphasize the write speed. In these application fields, NOR FLASH is still a key device affecting the device function and performance.

There is no valid solution for the problem of increased system cost due to the use of a backup power supply when the power failure data is saved in the related art.

### Summary

Some embodiments of the present disclosure provide a data saving method, a data saving device, or a terminal to solve the problem of increased system cost due to the use of a backup power supply when the power failure data is saved in the related art.

According to an aspect of the embodiments of the present disclosure, there is provided a data saving method. In the data saving method, power failure of a power supply is detected; a protection mechanism program for power failure data protection is triggered; and power failure data stored before occurrence of the power failure of the power supply is stored into a predetermined memory according to the protection mechanism program.

In an exemplary embodiment, before the power failure of the power supply is detected, the data saving method may further include a step as follows. The power failure data is stored in a partitioned storage mode according to degree of importance of data in the power failure data.

In an exemplary embodiment, the power failure data stored before the occurrence of the power failure of the power supply is stored into the predetermined memory according to the protection mechanism program in the following manner: data, the degree of importance of which exceeds a predetermined value, in the power failure data is preferentially stored into the predetermined memory.

In an exemplary embodiment, the predetermined memory may include a high speed non-volatile memory, and the high speed non-volatile memory may include at least one of the following memories: a Serial Peripheral Interface NOR Flash (SPI NOR FLASH), a Phase-Change Random Access Memory (PRAM), a variable Resistive Random Access Memory (RRAM), a Ferroelectric Random Access Memory (FRAM), and a Magnetic Random Access Memory (MRAM).

In an exemplary embodiment, before the power failure of the power supply is detected, the data saving method may further include a step as follows. Data stored in a region, into which the power failure data is to be written, of the predetermined memory is erased.

According to another aspect of the embodiments of the present disclosure, there is provided a data saving device, including: a detecting module, a triggering module and a first storage module. The detecting module is arranged to detect power failure of a power supply. The triggering module is arranged to trigger a protection mechanism program for power failure data protection. The first storage module is arranged to store, into a predetermined memory according to the protection mechanism program, power failure data stored before occurrence of the power failure of the power supply.

In an exemplary embodiment, the data saving device may further include a second storage module. The second storage module is arranged to store the power failure data in a partitioned storage mode according to degree of importance of data in the power failure data.

In an exemplary embodiment, the first storage module includes a storage unit. The storage unit is arranged to preferentially store data, the degree of importance of which exceeds a predetermined value, in the power failure data into the predetermined memory.

In an exemplary embodiment, the data saving device may further include an erasing module. The erasing module is arranged to erase data stored in a region, into which the power failure data is to be written, of the predetermined memory.

According to still another aspect of the embodiments of the present disclosure, there is provided a terminal including the data saving device according to any one of the above.

In the technical scheme provided by the embodiments of the present disclosure, power failure of a power supply is detected; a protection mechanism program for power failure data protection is triggered; and power failure data stored before occurrence of the power failure of the power supply is stored into a predetermined memory according to the protection mechanism program. The problem of increased system cost due to the use of a backup power supply when the power failure data is saved in the related art is solved. By virtue of the technical scheme, the power failure data can be saved without using a backup power supply

### Brief description of the drawings

The drawings are described here to provide further understanding of the present disclosure, and form a part of the present disclosure. The schematic embodiments and description of the present disclosure are adopted to explain the present disclosure, and do not form limits to the present disclosure. In the drawings:
Fig. 1 is a flow diagram of a data saving method according to an embodiment of the present disclosure;
Fig. 2 is a chip block diagram of an SPI NOR FLASH according to an embodiment of the present disclosure;
Fig. 3 is a structure block diagram of a data saving device according to an embodiment of the present disclosure;
Fig. 4 is a first exemplary structure block diagram of a data saving device according to an embodiment of the present disclosure;
Fig. 5 is a structure block diagram of a first storing module 36 in a data saving device according to an embodiment of the present disclosure;
Fig. 6 is a second exemplary block diagram of a data saving device according to an embodiment of the present disclosure;
Fig. 7 is a structure block diagram of a terminal according to an embodiment of the present disclosure;
Fig. 8 is a flow diagram of a method for protecting power failure data according to an embodiment of the present disclosure; and
Fig. 9 is a system frame diagram of a system according to an embodiment of the present disclosure.

### Detailed description of the embodiments

The present disclosure is described below with reference to the drawings and the embodiments in detail. It is to be noted that the embodiments of the present application and the characteristics in the embodiments may be combined with each other under the condition of no conflicts.

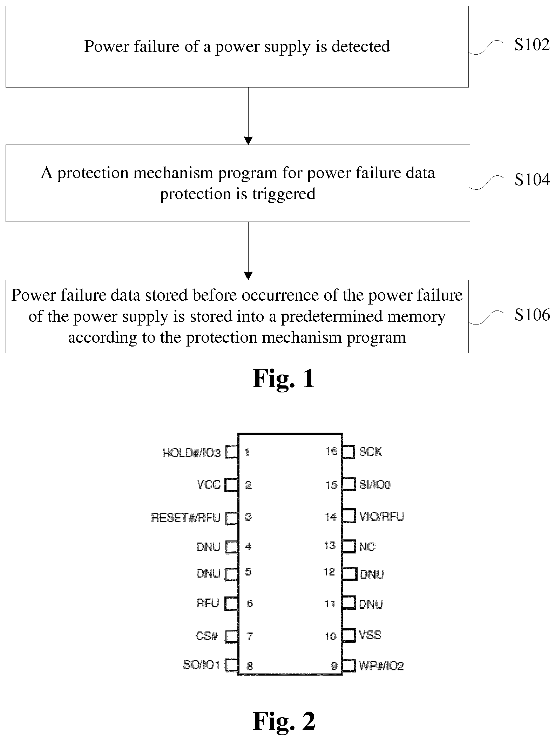

In a present embodiment, there is provided a data saving method. Fig. 1 is a flow diagram of a data saving method according to the embodiment of the present disclosure. As shown in Fig. 1, the flow includes the following steps.

In a step of S102, power failure of a power supply is detected.

In a step of S104, a protection mechanism program for power failure data protection is triggered.

In a step of S106, Power failure data stored before occurrence of the power failure of the power supply is stored into a predetermined memory according to the protection mechanism program.

According to the above steps, power failure of a power supply is detected, a protection mechanism program for power failure data protection is triggered, and power failure data stored before occurrence of the power failure of the power supply is stored into a predetermined memory according to the protection mechanism program. The purpose that the power failure data can be saved in the moment of power failure according to the protection mechanism program without using a backup power supply is achieved. Therefore, the problem of increased system cost due to the use of a backup power supply when the power failure data is saved in the related art is solved. By virtue of the technical scheme, the power failure data can be saved without using a backup power supply.

In an exemplary embodiment, before the power failure of the power supply is detected, the data saving method may further include the following step. The power failure data is stored in a partitioned storage mode according to degree of importance of data in the power failure data. That is, before the occurrence of the power failure, a part of data with a high degree of importance may be stored in the system, such as voltage, current, semaphore, switch quantity and other important parameters are preferentially stored in the system. In the moment of the occurrence of the power failure, these data stored within the system can be preferentially saved to the predetermined memory so as to improve the saving efficiency of important data.

In an exemplary embodiment, the power failure data stored before occurrence of the power failure of the power supply may be stored into a predetermined memory according to the protection mechanism program in the following manner. Data, the degree of importance of which exceeds a predetermined value, in the power failure data is preferentially stored into the predetermined memory. That is, the data stored in advance can be divided according to degree of importance of data in the power failure data at the time of storage. The data with a high degree of importance can be preferentially stored at the time of power failure. The data with a low degree of importance can be subjected to some compression processing, and can be stored after the data with a high degree of importance is stored so as to ensure the storage integrity of important data.

The above predetermined memory may include a high-speed non-volatile memory, and the high-speed non-volatile memory may include at least one of the following memories: a SPI NOR FLASH, a PRAM, a variable RRAM, a FRAM, and a MRAM. The SPI NOR FLASH has a capacity of more than 64M bytes. The read-write speed of the SPI NOR FLASH in the mode of the double data rate (DDR) can reach tens of millions of bytes per second, which is ten times of the parallel peripheral interface NOR FLASH. Fig. 2 is a chip block diagram of an SPI NOR FLASH according to an embodiment of the present disclosure. As shown in Fig. 2, the design of the chip is relatively simple. With respect to the conventional parallel peripheral interface NOR Flash, SPI NOR FLASH only needs a dozen of pins to achieve data storage of 64M or even 128M bytes, while the parallel peripheral interface NOR FLASH needs at least 50 pins. The PRAM is a non-volatile memory. Compared with an ordinary flash memory, PRAM has the characteristics of a high speed and a low power consumption. If the development is smooth, it is expected that PRAM will gradually replace FLASH to become a dominant force in the next generation of memory products. The variable Resistive Random Access Memory (ReRAM/RRAM) is a new type of non-volatile memories. The advantage is that the power consumption is low and the write speed is fast. The Ferroelectric Random Access Memory (FeRAM/FRAM) is a new type of non-volatile memories, using the ferroelectric effect of ferroelectric crystals to achieve data storage. The advantage is that the power consumption is low, and the write speed is fast. The Magnetic Random Access Memory (MRAM) is a non-volatile magnetic random access memory. It has a high-speed read-write capability like a static random access memory (SRAM) as well as high integration like a dynamic random access memory (DRAM), and can be basically written repeatedly indefinitely.

In an exemplary embodiment, before the power failure of the power supply is detected, the data saving method may further include the following step. Data stored in a region, into which the power failure data is to be written, of the predetermined memory is erased. The storage area in the predetermined memory can be erased when the system is just powered on so as to ensure that no erasing operation is caused during the power failure process, and provide more time for data storage.

In the present embodiment, there is also provided a data saving device for realizing the above embodiments and exemplary embodiments. Those having been described will not be described in detail. As used herein, the term "module" may implement a combination of software and/or hardware of a predetermined function. Although the data saving device described in the following embodiments are preferably implemented in software, the implementation of hardware, or a combination of software and hardware, is also possible and conceivable.

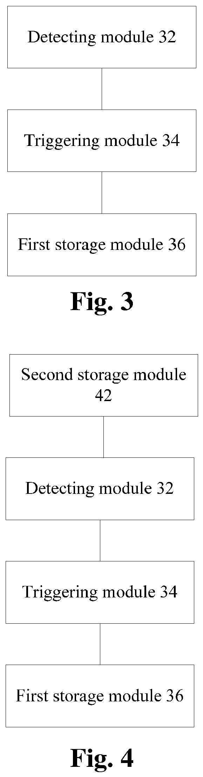

Fig. 3 is a structure block diagram of a data saving device according to an embodiment of the present disclosure. As shown in Fig. 3, the data saving device includes a detecting module 32, a triggering module 34, and a first storage module 36. The data saving device will be described below.

The detecting module 32 is arranged to detect power failure of a power supply; the triggering module 34 is coupled to the above detecting module 32 and arranged to trigger a protection mechanism program for power failure data protection; and the first storage module 36 is coupled to the above triggering module 34 and arranged to store, into a predetermined memory according to the protection mechanism program, power failure data stored before occurrence of the power failure of the power supply.

Fig. 4 is a first exemplary structure block diagram of a data saving device according to an embodiment of the present disclosure. As shown in Fig. 4, in addition to all the modules shown in Fig. 3, the data saving device may further include a second storage module 42. The data saving device will be described below.

The second storage module 42 is coupled to the above detecting module 32 and arranged to store the power failure data in a partitioned storage mode according to degree of importance of data in the power failure data.

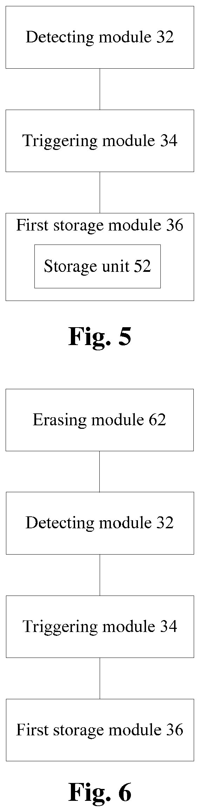

Fig. 5 is a structure block diagram of a first storing module 36 in a data saving device according to an embodiment of the present disclosure. As shown in Fig. 5, the first storage module 36 includes a storage unit 52. The data saving device will be described below.

The storage unit 52 is arranged to preferentially store data, the degree of importance of which exceeds a predetermined value, in the power failure data into the predetermined memory.

Fig. 6 is a second exemplary block diagram of a data saving device according to an embodiment of the present disclosure. As shown in Fig. 6, in addition to all the modules shown in Fig. 3, the data saving device may further include an erasing module 62. The data saving device will be described below.

The erasing module 62 is coupled to the above detecting module 32 and arranged to erase data stored in a region, into which the power failure data is to be written, of the predetermined memory.

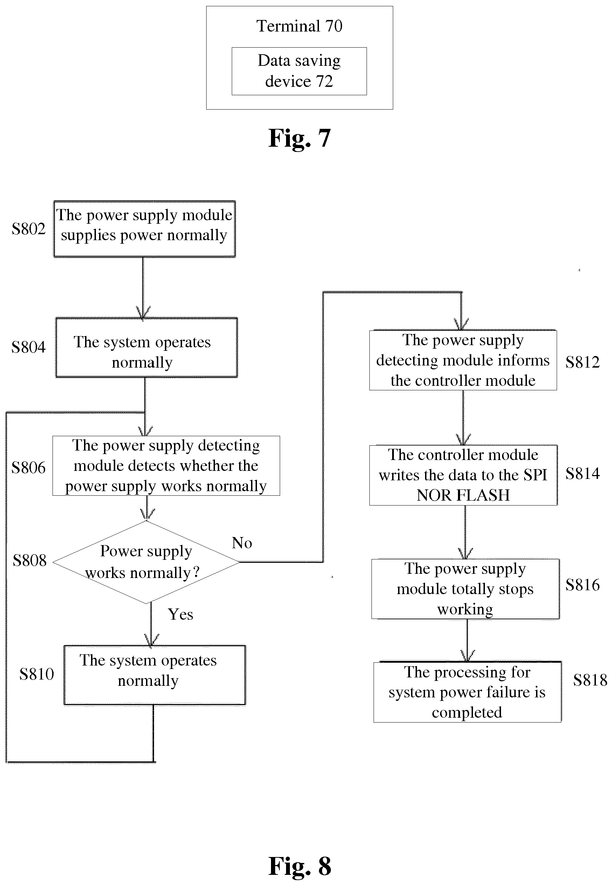

Fig. 7 is a structure block diagram of a terminal according to an embodiment of the present disclosure. As shown in Fig. 7, the terminal 70 includes a data saving device 72 according to any one of the embodiments.

In order to solve the problem of increased system cost due to the use of a backup power supply when the power failure data is saved in the related art, an embodiment of the present disclosure also provides a power failure data saving method and device as described below. The present disclosure will be described below with reference to specific embodiments.

The method for protecting the power failure data for the wireless communication product provided in the embodiment of the present disclosure can improve the recovery capability and reliability of the wireless communication product system and the abnormal recording capability. The method relates to a power supply, a power supply detecting unit (equivalent to the above detecting module 32), a controller (equivalent to the above trigger module 34 and the first storage module 36), and a stable and reliable high-speed non-volatile memory. The controller may include SOC chip of the high-speed SRAM. The stable and reliable high-speed non-volatile memory may include at least one of the five kinds of memories such as SPI NOR FLASH, PRAM, ReRAM/RRAM, FRAM/FeRAM, and MRAM.

Fig. 8 is a flow diagram of a method for protecting power failure data according to an embodiment of the present disclosure. As shown in Fig. 8, the flow includes the following steps.

In the step of S802, the power supply module supplies power normally.

In the step of S804, the system operates normally.

In the step of S806, the power supply detecting module detects the power supply.

In the step of S808, it is judged whether the power supply works normally.

In the step of S810, when the power supply works normally, the power supply is continuously detected, and the flow proceeds to Step S806.

In the step of S812, when the power supply has a power failure, the power supply detecting unit detects the power failure event and informs the controller.

In the step of S814, the controller executes the protection mechanism program in the high-speed SRAM with the time from the occurrence of the power failure event of the power supply to the time when the power supply is completely disabled, and writes the data in the high-speed SRAM into the stable and reliable high-speed non-volatile memory.

In the step of S816, the power supply module totally stops working.

In the step of S818, the processing for system power failure is completed.

When the power supply recovers power supply, the controller can retrieve the data before the power failure from the stable and reliable high-speed non-volatile memory. In the above method, when the power supply has a power failure, the power supply detecting unit detects the power failure event and informs the controller. Then the controller executes the protection mechanism program in the high-speed SRAM with the time from the occurrence of the power failure event of the power supply to the time when the power supply is completely disabled, and writes the data in the high-speed SRAM into the stable and reliable high-speed non-volatile memory. When the power supply recovers power supply, the controller can retrieve the data before the power failure from the stable and reliable high-speed non-volatile memory. In addition, the area to be written in the stable and reliable high-speed non-volatile memory may ensure that the erasing operation is not introduced during the entire power failure process.

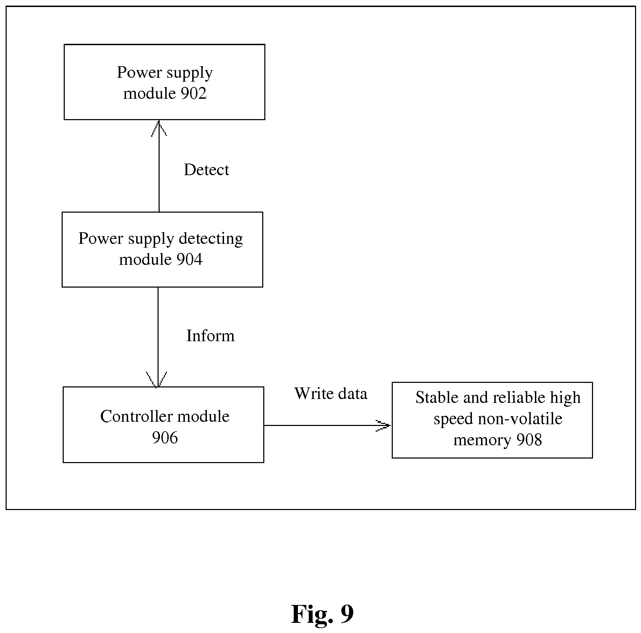

In an embodiment of the present disclosure, there is also provided a system for a base station product capable of improving the recovery capability and reliability of the base station product system and the abnormal recording capability. Fig. 9 is a system frame diagram of a system according to an embodiment of the present disclosure. As shown in Fig. 9, the system includes the following four parts: a power supply module 902, a power supply detecting module 904, a controller module 906, and a stable and reliable high speed non-volatile memory 908. When the power supply detecting module 904 detects that the power failure occurs, the cache data is immediately protected, and the protection data can be recovered quickly and efficiently after the system power is recovered. The power detecting module 904 is responsible for the completion of the power supply detection of the system power supply and the power supply module. The power detecting module 904 is arranged to implement functions including: detecting whether the system power supply is normal, and then triggering the related data protection behavior of the controller module 906. The power supply module 902 is the power supply part of the system, and provides necessary power supply to the controller module 906 and the stable and reliable high-speed non-volatile memory 908. The controller module 906 contains a high-speed SRAM, a part of which is used to store the processing code for managing the operation of the entire protection system after the power failure, and another part of which is used to store the power failure data which is not written to the stable and reliable high-speed non-volatile memory 908 in the normal operation. The stable and reliable high-speed non-volatile memory 908 stores the protection data read out by the high-speed SRAM of the controller module 906.

After the power failure, after discovering the power failure state detected by the power supply detecting module 904, the controller module 906 starts executing the power failure protection program in the high speed SRAM, copies the data into the stable and reliability high-speed non-volatile memory 908. The controller module 906 can acquire the protection data from the stable and reliable high-speed non-volatile memory 908 after the system power supply module 902 is recovered.

The stable and reliable high-speed non-volatile memory is used, including the five kinds of memories such as SPI NOR FLASH, PRAM, ReRAM/RRAM, FRAM/FeRAM, and MRAM. This is an improvement for some related arts using other memories. The common feature of these kinds of memories is a fast write speed and high data reliability. The memories in the related art have various problems, such as for the NAND FLASH, there is a risk that a bad block appears randomly and the written data may be wrong; for the parallel peripheral interface NOR FLASH or disk, the write speed is too slow to write data in the duration of power failure in time.

The data to be saved is placed in the high-speed SRAM inside the SOC, and is optimized for some related arts using a Synchronous Dynamic Random Access Memory (SDRAM) as a data cache, which is characterized in that implementation of the data saving reduces the normal operation of the SDRAM, which is the prerequisite. Moreover, compared to the SRAM inside the SOC, the SDRAM, as an off-chip memory, has a slow read-write speed, which is not conducive to upgrading the data saving efficiency of the scenario without a backup power supply.

In the embodiment of the present disclosure, the program for executing the protection mechanism is also stored in the high-speed SRAM, and is optimized for some related arts using an external memory as a data cache. The storage of the program in the high-speed SRAM is characterized in that the condition for the implementation of the data saving does not include the normal operation of the SDRAM anymore, which was a prerequisite condition. Moreover, compared to the SRAM inside the SOC, the SDRAM, as an off-chip memory, has a slow read-write speed, which is not conducive to upgrading the data saving efficiency of the scenario without a backup power supply.

The data to be saved is subjected to the data processing, e.g., arranging the data needing to be saved according to a certain priority and performing different data processing. The most important data such as the voltage, current and other parameters, are not subjected to data compression, and are first saved to a stable and reliable high-speed non-volatile memory after a power failure. Then, the semaphore, switch quantity and other parameters with a lower degree of importance are subjected to the data encoding processing, and then saved to the stable and reliable high-speed non-volatile memory. Finally, the log file run by the system with the lowest degree of importance are subjected to file compression and then saved to the stable and reliable high-speed non-volatile memory. The purpose of doing so is to save the most important data in the worst power failure scenarios as much as possible.

The area into which data is to be written in the stable and reliable high-speed non-volatile memory is pre-erased because of the characteristics that the data area of non-volatile memory should be first erased before the data can be correctly written to ensure that no erasing operation is introduced during the entire power failure process to avoid the waste of valuable time. In the related art without considering the problem, the erasing action of one sector may have consumed the full time of the power failure event.

The system for saving power failure data provided in the embodiment of the present disclosure is characterized by the integration of two key points, i.e., containing no backup power supply, and containing no external cache. Containing no backup power supply is an improvement for some related arts using power supply other than the main power supply, and the system does not contain other power supply other than the system power supply. Containing no external cache is an improvement for some technologies using memories other than SOC for saving data and power failure protection program. When the system has a power failure, these technologies will have one more prerequisite than the system in the embodiment of the present disclosure, that is, it should be ensured that the power supply for the memories other than SOC has to be normal in the power failure data saving process.

The system provided in the embodiment of the present disclosure allows the absence of a backup power supply. The constituent part in the system realizing the data saving requirement in the power failure scenario may also use the following component as an alternative.

The future memories such as future NAND FLASH may have a breakthrough in technology, solving the bad block problem, and ensuring the reliability of the performance of each data block in its life cycle.

The future memories may have a breakthrough in technology, and new memories may appear. The write speed of the new memories is faster than several types of memories specified herein. The non-volatile memory in the embodiment of the present disclosure may be replaced with the related memories that appear in the future.

The present disclosure will be further described below with reference to specific embodiments. The stable and reliable high-speed non-volatile memory in the application example may adopt SPI NOR FLASH, and the process includes the following steps.
1) After powering on the system, the area in which power failure data is to be written is prepared. The area should guarantee to accommodate single or multiple power failure data. Note that the "power failure data" here refers to all the data in the high-speed SRAM that is to be saved in the power failure. For the scenario of a single power failure data, after the power failure data is transferred and saved, the original storage area may be subjected to erasing operation. For the scenario of multiple power failure data, each power failure data is corresponding to a previous power failure event, each power failure data circulates successively according to the time, i.e., the power failure data with the longest time is erased. After the implementation of this step, it can be ensured that in the event of a power failure event in this operation, it is unnecessary to perform data erasing operation in the process of saving power failure data.
2) When the system is running, the power supply detecting module monitors the operation of the system power supply in real time, and the basis of determining a power failure event may be detecting that the power supply voltage drops to a threshold.
3) When the system is running, the important data, such as voltage, current, semaphore, switch quantity and other parameters, are recorded and sampled multiple times circularly in a chronological order, and the values of the important data are stored in the high-speed SRAM of the SOC. The log file for the running of the system is stored in the external SDRAM in a file form. The "parameter" may refer to all the data in the high-speed SRAM to be saved in a power failure, and may contain several sampling values. Each sampling value corresponds to a previous sampling. Each sampling value is circulated in a chronological sequence, and the latest sampling value overrides the sampling value with the longest time. The most important voltage, current and other data values may not be subjected to data processing. The less important semaphore, switch quantity and other data may be subjected to data encoding processing. Each sample occupies only one or more bits. The log file for the running of the system may be stored in the external SDRAM in a file form.
4) After the power failure event is determined, the power supply detecting module informs the controller module by virtue of interruption.
5) The controller module executes the protection mechanism program in the high-speed SRAM, reads the most important voltage, current and other data immediately, writes the sampling value circulation in the high-speed SRAM, labels the latest value for distinguishing, and then writes the parameter immediately to SPI NOR FLASH.
6) The controller module executes the protection mechanism program in the high-speed SRAM, reads the less important semaphore, switch quantity and other data, writes the sampling value circulation in the high-speed SRAM, labels the latest value for distinguishing, and then writes the parameter immediately to SPI NOR FLASH.
7) The controller module read the latest log file for the running of the system from the external SDRAM, and then performs file compression and writes the file to SPI NOR FLASH. Since there may be a power failure at any time in this step, the log file may be saved incompletely.
8) The processing for the system power failure event is completed.
9) After a period with an uncertain length, the system is powered on again. The user can analyze the power failure scenario that occurred previously according to the power failure data saved in the SPI NOR FLASH.

Obviously, those skilled in the art should know that each module or step of the embodiment of the present disclosure may be implemented by a universal computing device, and the modules or steps may be concentrated on a single computing device or distributed on a network formed by a plurality of computing devices, and may optionally be implemented by programmable codes executable for the computing devices, so that the modules or steps may be stored in a storage medium for execution with the computing devices, and, in some cases, the steps shown or described may be performed in a order different from the order herein, or the modules or steps may form each integrated circuit module, or multiple modules or steps therein may form a single integrated circuit module for implementation. As a consequence, the present disclosure is not limited to any specific hardware and software combination.

The above is only the exemplary embodiment of the present disclosure and not intended to limit the present disclosure, and for the technician of the field, the present disclosure may have various modifications and variations. Any modifications, equivalent replacements, improvements and the like within the principle of the present disclosure shall fall within the scope of protection as defined by the appended claims of the present disclosure.

### Industrial Applicability

As described above, with the above embodiments and exemplary embodiments, the problem of increased system cost due to the use of a backup power supply when the power failure data is saved in the related art is solved. By virtue of the technical scheme, the power failure data can be saved without using a backup power supply.

## Claims

1. A data saving method, comprising:
detecting power failure of a power supply;
triggering a protection mechanism program for power failure data protection; and
storing, into a predetermined memory according to the protection mechanism program, power failure data stored before occurrence of the power failure of the power supply.

2. The data saving method as claimed in claim 1, wherein before detecting the power failure of the power supply, the data saving method further comprises:
storing the power failure data in a partitioned storage mode according to degree of importance of data in the power failure data.

3. The data saving method as claimed in claim 2, wherein storing, into the predetermined memory according to the protection mechanism program, the power failure data stored before the occurrence of the power failure of the power supply comprises:
preferentially storing data, the degree of importance of which exceeds a predetermined value, in the power failure data into the predetermined memory.

4. The data saving method as claimed in claim 1, wherein the predetermined memory comprises a high speed non-volatile memory, and the high speed non-volatile memory comprises at least one of the following memories:
a Serial Peripheral Interface NOR Flash, SPI NOR FLASH, a Phase-Change Random Access Memory, PRAM, a variable Resistive Random Access Memory, RRAM, a Ferroelectric Random Access Memory, FRAM, and a Magnetic Random Access Memory, MRAM.

5. The data saving method as claimed in claim 1, wherein before detecting the power failure of the power supply, the data saving method further comprises:
erasing data stored in a region, into which the power failure data is to be written, of the predetermined memory.

6. A data saving device, comprising:
a detecting module, arranged to detect power failure of a power supply;
a triggering module, arranged to trigger a protection mechanism program for power failure data protection; and
a first storage module, arranged to store, into a predetermined memory according to the protection mechanism program, power failure data stored before occurrence of the power failure of the power supply.

7. The data saving device as claimed in claim 6, wherein the data saving device further comprises:
a second storage module, arranged to store the power failure data in a partitioned storage mode according to degree of importance of data in the power failure data.

8. The data saving device as claimed in claim 7, wherein the first storage module comprises:
a storage unit, arranged to preferentially store data, the degree of importance of which exceeds a predetermined value, in the power failure data into the predetermined memory.

9. The data saving device as claimed in claim 6, wherein the data saving device further comprises:
an erasing module, arranged to erase data stored in a region, into which the power failure data is to be written, of the predetermined memory.

10. A terminal comprising the data saving device as claimed in any one of claims 6 to 9.
